# EUROPEAN PATENT APPLICATION

(11) **EP 1 496 451 A2**
(43) Date of publication of application: **12.01.2005**
(21) Application number: 03078286.6
(22) Date of filing: 17.10.2003
(51) Int. Cl.: G06F 17/30

(54) **Computer system, searching method for in a computer system, a computer program product and an article of manufacture**

(30) Priority: 16.05.2003 EP 03011202
(71) Applicant: SAP AG, 69190 Walldorf (DE)
(72) Inventor: Hatscher, Michael, 49080 Osnabrück (DE); Beringer, Joerg, 60431 Frankfurt (DE)
(74) Representative: Prins, Adrianus Willem, Mr. Ir.

(57) **Abstract**

A computer system (1), comprising: a user interface (20), the user interface (20) having: at least one control for inputting at least one search criterion for searching in a database (3), a visual result interface (212) for at least visually outputting the result, at least one control in the visual result interface (212) for selecting at least one element of a result of said searching;; a visual selection interface (213) for at least visually outputting the selection; which visual result interface (212) and visual selection interface (213) are positioned beside each other; the computer system (1) further comprising: a processor device communicatively connected to the user interface (20) and connectable to the database (3), which processor device is arranged for: searching in said database (3) with said at least one search criterion; outputting to the user interface (20) a result of said searching; and outputting to the user interface (20) said selection from the result.

## Description

The invention relates to a computer system, a searching method for finding information in a computer system, a computer program product and an article of manufacture.

In the art, a computer system with a user interface is known in which the user interface has a control for inputting search criteria. The search criteria can thereafter be used by the computer system during a search operation in which data is retrieved from a database. The results of the search are shown in a visual result interface on a display as a list of items. The user interface has select controls by means of which a user may select at least one element of the results. The selected results are then displayed in a visual selection interface as a vertical list of items. In this prior art system, the visual result interface and the visual selection interface are vertically positioned in different positions with respect to each other, i.e. one is on top of the other. The visual result interface and visual selection interface are horizontally located at the same position.

However, a drawback of the known system is that it has a low-ease of use, since as the amount of results and/or the selection of the results increases, most of all if there is a lot of information displayed for each item, the vertical dimensions of the list will increase as well. Depending on the vertical size of the display, this results for a certain amount of results or selected results, in an insufficient space to display the result and/or the selection simultaneously. In the prior art computer system, the visual result interface and visual search interface can have an overlap in the vertical direction to display as much of the results or selection as possible. However, this prior art solution has the disadvantage that at least a part of the items of one of the visual interfaces is obscured by the other visual interface and thus not visible to the user.

It is a goal of the invention to provide a computer system with an increased ease of use The invention therefore provides a computer system according to claim 1.

The visual result interface and the visual selection interface are positioned beside each other. The visual interfaces are thus not horizontally positioned in the same position. Therefore, the items, e.g. the results and the selection, outputted at the visual interfaces are not obscured by the other visual interface in case of a, relatively, large amount of results and/or selection of results and/or higher quantities of information on results and/or selection items. Accordingly, the ease of use is increased.

The invention further provides a method according to claim 6. In such a method, information in each of the visual interfaces is not obscured by the other visual interface because the visual result interface and the visual selection interface are positioned beside each other and not arranged vertically with respect to each other.

The invention also provides a computer program product according to claim 7 and an article of manufacture according to claim 8.

Specific embodiments of the invention are set forth in the dependent claims. Further details, aspects and embodiments of the invention are depicted, by way of example only, in the attached drawings and will be described with reference to the attached drawings.
Fig. 1 schematically shows an example of an embodiment of a computer system according to the invention.
Fig. 2 schematically shows an example of an embodiment of a user interface suitable for use in the example of fig. 1.
Fig. 3 schematically shows the example of fig. 2 in more detail.

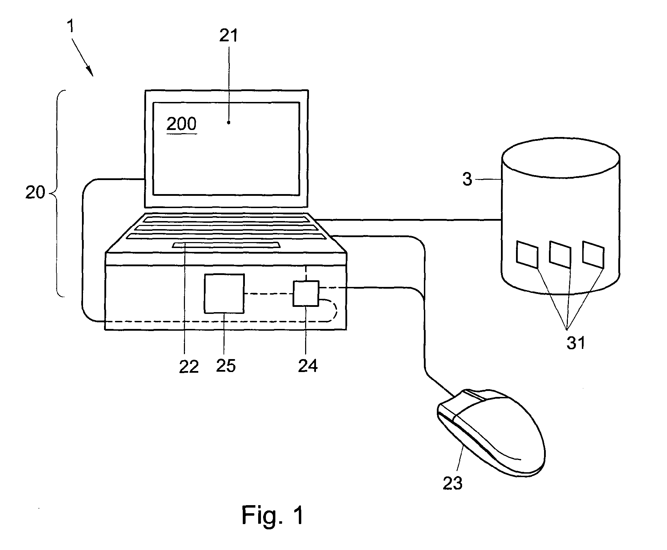

Fig. 1 shows an example of a computer system 1 which comprises a computer device 2 which is communicatively connected to a database 3. In the database, objects or items 31 are stored. The objects 31 may for example be documents in a computerized knowledge-base describing certain know-how or otherwise. Likewise, in the database 3 other types of items may be stored. In the example of fig. 1, the database 3 lies outside the computer device 2 and is communicatively connected to the computer device 2, but the database may likewise be positioned inside the computer device 2.

The computer device 2 is provided with a user interface (UI) 20, which in this example comprises an output interface, e.g. display 21 which is also referred to as a graphical user interface (GUI), at which data can be outputted in human-perceivable form to a user. In this example, the data can be outputted visually at the display 21. The user interface 20 further comprises an input interface at which the user can input data into the computer device 2. In this example, the input interface comprises a keyboard 22 and a mouse 23. Both the output interface and the input interface may comprise other components than those depicted in figure 1, such as an electronic writing pad, acoustic output or input devices or otherwise. Furthermore (parts of) the input interface and the output interface may at least partially be integrated in the same device, such as a touch-screen or otherwise.

In the example of fig. 1 the computer system 2 further comprises a processor 24 which is communicatively connected to the display 21, the keyboard 22, the mouse 23 and a memory 25, as is indicated with the lines in fig. 1. The processor 24 is arranged to handle input from the input interface, and output data in the output interface, e.g. at the display 21. The processor 24 may further be provided with other functionality, such as ability to handle data received or outputted to other device, manipulate data, run one or more computer programs stored in the memory 25 or otherwise.

In the example of figs. 1-3, actions performed by a user by means of the keyboard 22 and mouse 23 are graphically represented at the GUI by the computer system 1. Thus, in this example, when actions are said to be performed by a user at the GUI, the actions are performed by means of the keyboard 22 and mouse 23, but graphically represented at the GUI. However, it is likewise possible to combine the GUI and the input interface, for example as a touch-screen or otherwise. In such case, actions said to be performed by a user at the GUI are both represented and performed at the GUI.

As shown in fig. 1, the user interface 20 comprises a graphical program interface 200 which is a visual representation at the display 21 of (at least a part of) a computer program running on the computer system 2. The computer program may for example provide a user at a node in a computer network with access to resources on a server in the network. In the example of fig. 1, the graphical program interface 200, for example, is a graphical representation of a web-browser program which allows access to resources, such as applications, data and services of a computerized enterprise management system, such as is sold by SAP AG of Walldorf, Germany. In case the objects 31 in the database 3 are documents describing certain know-how or ideas, the browser for example be a type of browser as is traded by SAP AG of Walldorf, Germany under the name 'idea browser'. The database may then be a so-called "idea pool".

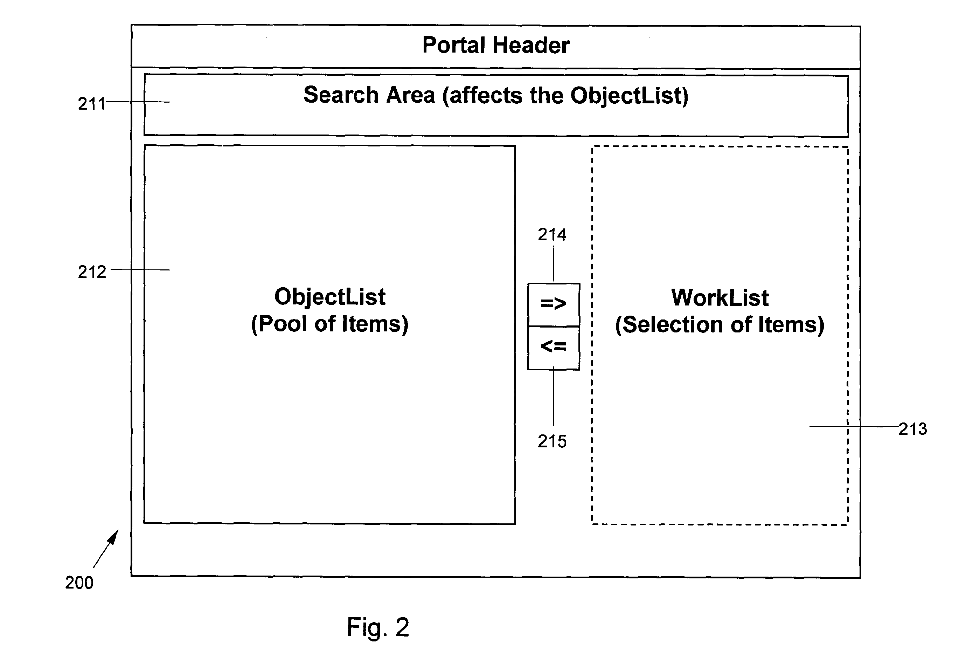

As shown in fig. 2, the graphical program interface 200 has a search control interface 211 "Search area" for inputting at least one search criterion for searching in the database 3. In this example, the search control interface 211 comprises a field displayed in the display 21 at which the user can enter a search query by means of the keyboard 22 and mouse 23. For instance, the search query may comprise one or more search criteria which an object 31 in the database 3 should satisfy. The criteria may for example be that the object 31 in the database 3 has to have a certain ID or that the object 31 has properties or attributes which satisfy a certain requirement. For instance, if the objects 31 are items which comprise information about people working in a company, the criteria may for example be that the name of a person should begin with a certain character or that the person is assigned a certain function. If the objects 31 are text documents describing certain know-how or ideas, the criteria may for example be that the document should relate to a certain product or otherwise.

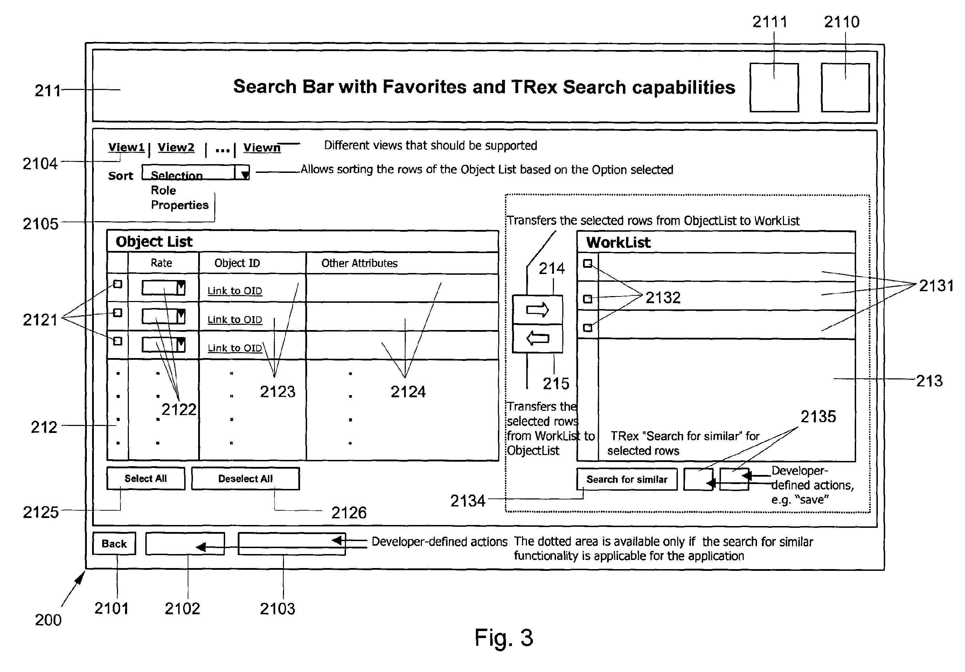

The search control interface 211 may be implemented in any suitable way. In fig. 3, for example, the search control interface 211 comprises a favorites control 2110 by means of which a list of preferred items in the database 3 can be listed. This list may for example be stored in the memory 25 and be generated automatically based on previous selections of items in the database by the user. The search control 211 in fig. 3 further has an "advanced search" control 211, which provides an extensive searching interface and allows for more sophisticated searching, for instance with the retrieval and classification engine traded under the name TREX by SAP AG of Walldorf, Germany.

Via the advanced search control 2111, the user can indicate a search program and open a search interface outside the graphical program interface 200. The search program interface allows the user to specify more extensive search criteria and search in the database 3 for items satisfying the specified criteria. The search interface may likewise be implemented as a part of the graphical program interface 200 and be a part of the search control interface 211.

In the example of fig. 1, the processor 24 is arranged for searching in the database 3 with the search criterion and outputting a result of the search at the display 21. In response to this, the result is outputted visually at a visual result interface 212 within the graphical program interface in the display 21, as an "object list". The object list is a list of one or more items identifying one or more objects in the database 3 which satisfy the search criteria.

The graphical program interface 200 further has a visual selection interface 213 at which a selection of the items in the visual result interface 212, the "WorkList", can be outputted visually. The graphical program interface 200 is provided with a "move" control 214 for executing a move operation on at least one element of the items listed in the usual result interface 212. In this example, the "move" control 214 comprises a button displayed at the display 21 which can be pressed by means of the mouse 23. In response to pressing the button selected items in the visual result interface 212 are transferred or copied to the visual selection interface 213. However, the "move" control 214 may likewise be implemented differently. For example, a user may select one or more items from the visual result interface 212 by means of pressing a certain button of the keyboard 22 or otherwise. The graphical program interface 200 also has a "remove" control 215 by means of which selected parts of the results can be removed from the visual selection interface 213.

As shown in fig. 2, the visual result interface 212 and visual selection interface 213 are positioned beside each other and not arranged vertically with respect to each other. Thereby, the result of the search and the selection can be displayed simultaneously. Even when the amount of items in the visual result interface 212 or the visual selection interface 213 is large, the interfaces 212 and 213 do not overlap each other. Thus, none of the items in the visual interfaces 212 and 213 is obscured by another one of the visual interfaces 212 and 213.

As is shown in more detail in fig. 3, the visual selection interface 213 comprises item fields 2131 in each of which an item of the selection from the visual result interface 212 is displayed. The user can select one or more of the items by means of the controls 2132. The user may then perform a search in the database for items associated with the selected items, by means of the "search for similar" control 2134. The "search for similar" control 2134 may for example invoke an operation performed by the processor 24 in which the processor 24 searches in the database 3 for objects 31 which have similar properties as the selected items. For example, if the items represent text documents, the processor 24 may then search for documents related to the same topic or, in case the items represent the names of people in a company, the processor 24 may search in the database 3 for other people working in the same department as those selected. The results of this search are then presented in the search result interface.

Besides the "search for similar "control 2134, the user interface 20 in the example of fig. 3 has other controls for activating one or more event(s) associated with at least a part of the selection, which are denoted with reference number 2135 in fig. 3. For example, the user interface 20 may be provided with a control for starting a second computer program associated with one or more of the items, by initiating performing by the processor steps according to program code stored on the computer system 2. When the selected items are the names of persons for instance, an e-mail program may for example be started by means of the controls 2135 to send e-mails to those persons or otherwise. For example, when the items represent concepts of texts which have been stored in the database 3, a text editor program may be started to edit the text. Likewise, the event initiated by means of the controls 2135 may be the merging of two or more items into a single item or otherwise.

In the visual result interface 212, the results of the search operation in the database 3 are listed as items. In the visual result interface 212 object identification data (o.i.d.) is shown as well as other attributes of the items in fields 2124. In fig. 3, the object identification data 2123 is provided with a control, for example, a hyperlink, by means of which information about an item can be retrieved and displayed, as is indicated in fig. 3 with reference number 2123. Also, a rating is outputted in rating field 2122 which provides information about the amount of correspondence/the goodness of fit between the one or more search criteria and the listed item(s).

As is shown in fig. 3 with reference numbers 2121, 2123, 2125 and 2126, the visual result interface 212 may also be provided with controls. In fig. 3 for example, a select control 2121 is provided by means of which the user can select one or more items listed in the visual result interface 212. Also a "select all" control 2125 is provided by means of which the user can select all items in the visual result interface 212 (and transfer the items to the visual selection interface 213 by means of the "move" control 214). By means of a "deselect all" control 2126, the user can deselect all selected items.

The graphical program interface 200 is further provided with a "sort" control 2105 by means of which the results can be sorted, for example in alpha-numeric order of their object IDs, the rating outputted in the rating fields 2122 or otherwise. The interface 200 is also provided with view controls 2104 by means of which a different view can be outputted on the display. Also, a "return" control 2101 is present via which the user can return to a previous search or other browser window. Other controls may also be provided, as is shown in fig. 2 with controls 2102, 2103, such as a "save" control via which the user can store the results of a search and search criteria in a memory of the computer system or otherwise. The user can for example save personalized lists of selected search results, which can later on be used as starting points for further exploration of the idea pool, searches for similar items etc.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

The invention may also be implemented in an article of manufacture with a computer-usable medium having computer-readable instructions embodied therein for providing access to resources available on that computer, the computer-readable instructions comprising instructions to cause the computer to perform the steps of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further be a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims. For example, in fig. 1 the database 3 is depicted outside the computer device 2, but the database may likewise be present inside the computer device. Also, the computer device 2 and/or the database 3 may be connected to other devices or systems. Furthermore, the computer system may be any device suitable, such as for example a general-purpose computer, a personal digital assistant or otherwise. In the claims, any reference signs placed between parentheses shall not be construed as limiting the claim. The word 'comprising' does not exclude the presence of other elements or steps than those listed in a claim. The mere fact that certain measures are recited in mutually different claims does not indicate that a combination of these measures cannot be used to advantage.

## Claims

1. A computer system (1), comprising a user interface (20),
the user interface (20) comprising a display device (21) arranged for displaying a graphical program interface (200) which comprises:
at least one search control (211) for inputting at least one search criterion for searching in a database (3),
a visual result interface (212) for at least visually outputting the result of said searching;
at least one result selection control (214,215) for selecting at least one element of the result; and a visual selection interface (213) for at least visually outputting the selection;
which visual result interface (212) and visual selection interface (213) are
positioned beside each other;
which computer system (1) further comprises a processor device (24) communicatively connected to the user interface (20) and connectable to the database (3), which processor device is arranged for:
searching in said database (3) with said at least one search criterion;
outputting to the result selection interface (212) a result of said searching; and
outputting to the visual selection interface (213) said selection of the result.

2. A computer system (1) as claimed in claim 1, wherein the user interface (20) further comprises at least one control for activating at least one event associated with at least one element of the selection.

3. A computer system (1) as claimed in claim 2, wherein the event comprise at least one of the group consisting of:
searching in said database (3) for items associated with at least one element of the selection;
initiating performing by the processor steps according to program code stored on the computer system (1).

4. A computer system (1) as claimed in claims 1, 2, or 3, wherein the visual result interface (212) is provided a control for opening a computer program associated with at least one of said results.

5. A computer system (1) as claimed in any one of the preceding claims, further comprising a favorites control for displaying at least one predetermined list of preferred items in the visual result database (3).

6. A computerized searching method, comprising:
providing at a user interface (20) at least one control for inputting at least one search criterion for searching in a database (3);
searching in said database (3) with said at least one search criterion;
outputting a result of said searching at a visual result interface (212) of the user interface (20);
providing at the user interface (20) at least one control for selecting at least a part of said result;
selecting at least one element of said result;
outputting said selection of the result at a visual selection interface (213) of the user interface (20),
which visual result interface (212) and visual selection interface (213) are positioned beside each other.

7. A computer program product, comprising program code portions for performing steps of a method as claimed in claim 6 when run on a programmable apparatus.

8. An article of manufacture with a computer-usable medium having computer-readable instructions embodied therein for providing access to resources available on that computer, the computer-readable instructions comprising instructions to cause the computer to perform the steps of a method as claimed in claim 6.
